# EUROPÄISCHE PATENTANMELDUNG

(11) **EP 4 040 557 A1**
(43) Veröffentlichungstag der Anmeldung: **10.08.2022**
(21) Anmeldenummer: 22151353.4
(22) Anmeldetag: 13.01.2022
(51) Int. Cl.: H01M 10/0562

(54) **VERWENDUNG EINES LUFTSTABILEN FESTKÖRPERELEKTROLYTEN**

(30) Priorität: 05.02.2021 DE 102021201102
(71) Anmelder: VOLKSWAGEN AG, 38440 Wolfsburg (DE)
(72) Erfinder: ZHANG, Wenbo, 38547 Calberlah (DE)
(74) Vertreter: FDST Patentanwälte

(57) **Zusammenfassung**

Die Erfindung betrifft eine Verwendung eines luftstabilen Festkörperelektrolyten (20) als Beschichtung für eine Batteriekomponente (12, 14, 16, 18) einer Batteriezelle (6).

## Beschreibung

Die Erfindung betrifft eine Verwendung eines luftstabilen Festkörperelektrolyten als Beschichtung für eine Batteriekomponente einer Batteriezelle. Die Erfindung betrifft weiterhin eine Batteriekomponente sowie eine Batteriezelle.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriezellmodul auf, bei welchem mehrere einzelne Batteriezellen modular verschaltet sind.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyten (Flüssigelektrolyt) durchdrungen, welcher eine ionenleitfähige Verbindung der Bestandteile beziehungsweise einen Ladungsausgleich erzeugt. In der Regel sind hierbei mehrere Schichtzellen als ein Zellenstapel übereinander gestapelt angeordnet.

Schichtzellen mit einem Festkörperelektrolyten (Festelektrolyt, FE), nachfolgend auch als Festkörperzellen oder ASSB-Zellen (ASSB: all solid state battery) bezeichnet, weisen bei gleichem Baugewicht und/oder Bauvolumen eine höhere Energiespeicherdichte als Schichtzellen mit Flüssigelektrolyten auf. Batterien mit Festkörperzellen sind nachfolgend auch als Festkörperbatterien (FKB) oder Feststoffbatterien bezeichnet. Bei Festkörperzellen ist die Kathode beziehungsweise die Kathodenschicht in der Regel als eine sogenannte Kompositkathode aus einem Festkörper-Polymer-Verbundmaterial ausgeführt. Kompositkathoden weisen beispielsweise Kathodenmaterialien, Bindermaterialien, Leitadditive (Kohlenstoffe) und Festkörperelektrolyte (partikelförmig) auf.

Die Festkörperelektrolyte wirken in der Kompositkathode als ein ionisch leitendes Additiv. Zur Verbesserung der elektrischen Eigenschaften ist die Kompositkathode häufig mit Leitpartikeln als zusätzliches Leitadditiv versetzt. Kohlenstoffbasierte Leitpartikel, beispielsweise ein Leitruß oder ein Leitgraphit, sind aufgrund ihrer hohen Leitfähigkeit ein wichtiger Bestandteil von Lithium-lonen-Batterien, welche den Kathodenwiderstand, und somit den Innenwiderstand der Batterie, reduzieren.

Bei Feststoffbatterien ist der Festkörperelektrolyt wichtig für die Energiedichte, Leistungsdichte und Sicherheit der Festkörperzelle beziehungsweise der Batterie. Aufgrund einer hohen ionischen Leitfähigkeit werden bei Festkörperzellen häufig sulfidische Festkörperelektrolyte, also Festkörperelektrolyte mit einer sulfidischen Verbindung, verwendet. Nachteiligerweise weisen sulfidbasierte Festkörperelektrolyten jedoch eine geringe Luftstabilität auf. Insbesondere kann hierbei durch eine chemische Reaktion des sulfidischen Festkörperelektrolyten mit einer Luftfeuchtigkeit gasförmiger Schwefelwasserstoff (H₂S) entstehen. Schwefelwasserstoff ist ein giftiges, korrosives und brennbares Gas, und kann bereits ab einer Konzentration von 5 ppm (parts per million) zu Irritationen von Augen, Nase und Hals führen. Des Weiteren werden als Kathodenmaterialien in der Regel Lithium-Nickel-Mangan-Cobalt-Oxide (NMC), wie beispielsweise NMC 811, verwendet, welche ebenfalls eine hohe Empfindlichkeit - also geringe Stabilität - gegenüber Luft und (Luft-)Feuchtigkeit aufweisen.

Um die luftempfindlichen Komponenten der Batteriezelle (Batteriekomponenten) zu schützen wird die Zellenfertigung oder Produktion der Festkörperzelle in der Regel in einem Trockenraum mit einem hohen Taupunkt (beispielsweise -60 °C) durchgeführt. Dadurch treten hohe Kosten für die Anlage und deren Betrieb auf, wodurch die Herstellungskosten der Batterie- oder Festkörperzelle nachteilig erhöht werden.

Der Erfindung liegt die Aufgabe zugrunde eine besonders geeignete Verwendung eines luftstabilen Festkörperlelektrolyten anzugeben. Insbesondere soll eine möglichst aufwandreduzierte und kostengünstige Zellenfertigung einer Batteriezelle gewährleistet werden. Der Erfindung liegt weiterhin die Aufgabe zugrunde, eine besonders geeignete Batteriekomponente sowie eine besonders geeignete Batteriezelle anzugeben.

Hinsichtlich des Verfahrens wird die Aufgabe mit den Merkmalen des Anspruchs 1 und hinsichtlich der Batteriekomponente mit den Merkmalen des Anspruchs 6 sowie hinsichtlich der Batteriezelle mit den Merkmalen des Anspruchs 8 erfindungsgemäß gelöst. Vorteilhafte Ausgestaltungen und Weiterbildungen sind Gegenstand der Unteransprüche. Die im Hinblick auf die Verwendung angeführten Vorteile und Ausgestaltungen sind sinngemäß auch auf die Batteriekomponente und/oder die Batteriezelle übertragbar und umgekehrt.

Erfindungsgemäß wird ein luftstabiler Festkörperelektrolyt, also ein luft- oder feuchtigkeitsunempfindliches Festkörperelektrolytmaterial, zur Beschichtung einer Batteriekomponente einer Batteriezelle verwendet. Mit anderen Worten wird eine Batteriekomponente der Batteriezelle mit einem luftstabilen Festkörperelektrolyt beschichtet. Dadurch wird eine luft- oder feuchtigkeitsempfindliche Batteriekomponente mit einer geeigneten Schutzschicht versehen, so dass es möglich ist, eine Assemblierung oder Produktion der Batteriezelle in einer milderen Atmosphäre zu realisieren. Dadurch werden Produktionskostenreduktion wesentlich reduziert, so dass eine besonders geeignete Verwendung realisiert ist.

Unter "luftstabil" ist hier und im Folgenden eine (elektro-)chemische Stabilität des Festkörperelektrolyten gegenüber Luft beziehungsweise Luftfeuchtigkeit zu verstehen, also eine thermodynamische oder zumindest kinetische Stabilität des Festkörperelektrolyten in einer Luftumgebung, so dass die chemische Zusammensetzung des Festkörperelektrolyten in Luft zumindest für einen gewissen Zeitraum stabil ist. Vorzugsweise ist der luftstabile Festkörperelektrolyt hierbei zumindest über die Dauer des Fertigungsprozesses der Batteriezelle luftstabil.

Unter einer Batteriekomponente wird hier und im Folgenden insbesondere ein Teil oder Bestandteil der Batteriezelle verstanden. Insbesondere ist unter einer Batteriekomponente eine Elektrodenschicht, beispielsweise eine Kathoden- oder Kompositkathodenschicht, der Batteriezelle zu verstehen. Unter einer Batteriekomponente sind weiterhin die Bestandteile einer solchen Elektrodenschicht, also das Elektrodenschichtmaterial zu verstehen. Bei einer Kompositkathode ist das Elektrodenschichtmaterial insbesondere als ein Verbundmaterial ausgeführt, welches beispielsweise aus einem Kathodenmaterial und einem Festkörperelektrolyt als ionisches Leitadditiv sowie weiteren elektrischen Leitadditiven (Kohlenstoffe) und einem Binder hergestellt ist, wobei unter einer Batteriekomponente hierbei insbesondere Festkörperelektrolyt und/oder das Kathodenmaterial und/oder das Leitadditiv zu verstehen sind.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Erfindungsgemäß wird die Oberfläche von den relevanten Batteriekomponenten modifiziert, damit die Stabilität der Batteriekomponenten gegenüber Luft und Luftfeuchtigkeit verbessert wird. Hierzu wird ein luftstabiler Festkörperelektrolyt als Coating- oder Beschichtungsmaterial verwendet.

In einer geeigneten Ausführung weist der luftstabile Festkörperelektrolyt eine hinreichende Lithium-Ionen-Leitfähigkeit auf, so dass die Beschichtung keinen zusätzlichen Ladungstransferwiderstand der Batteriekomponente bewirkt. Dadurch wird eine zuverlässige Schnellladefähigkeit der Batteriezelle gewährleistet. Geeigneterweise weist der luftstabile Festkörperelektrolyt eine ionische Leitfähigkeit größer 10⁻⁴S/cm (Siemens pro Zentimeter), insbesondere größer 10⁻³ S/cm, auf.

Vorzugsweise weist der luftstabile Festkörperelektrolyt weiterhin eine elektrochemische Stabilität innerhalb des Betriebsspannungsbereiches der Batteriezelle auf. Bei einer Lithium-Festkörperzelle liegt der Betriebsspannungsbereich beispielsweise zwischen 2,5 V (Volt) bis 4,3 V für Li/Li⁺. Des Weiteren darf sich die luftstabile Festkörperelektrolytbeschichtung nicht beim Zyklen zersetzen.

Das Designprinzip eines luftstabilen Festkörperelektrolyten mit den vorstehend genannten Eigenschaften ist beispielsweise in der Veröffentlichung "Materials Design Principles for Air-Stable Lithium/Sodium Solid Electrolytes" von Dr. Y. Zhu und Prof. Y. Mo beschrieben (DOI: 10.1002/anie.202007621).

In einer denkbaren Ausgestaltung ist der luftstabile Festkörperelektrolyt ausgewählt aus einer Gruppe, welche gebildet wird von Lithium-Indiumchlorid (Li₃InCl₆), Lithium-Indiumbromid (Li₃InBr₆), ein Lithium-Lanthaniodid (Li₃LaI₆), ein Lithium-Lutetiumchlorid (Li₃LuCl₆), oder ein lithiumleitendes Seltenerden-Halogenid der Form Li₃MX₆, wobei M entweder Yttrium Y, Erbium Er oder Scandium Sc, und wobei X entweder Chlor Cl, Brom Br, oder lod I repräsentiert, oder der Form Li₃₋ₓM₁₋ₓZrₓCl₆, (wobei x ≤ 0.6 und wobei M entweder Er oder Y repräsentiert), oder der Form Li₃Y₁₋ₓInₓCl₆ (wobei 0 ≤ x < 1), oder der Form LiₓScCl₃₊ₓ (wobei 0 ≤ x ≤ 5, insbesondere 1 ≤ x ≤ 5).

In einer bevorzugten Weiterbildung wird die erfindungsgemäße Verwendung bei einer Festkörperzelle oder ASSB-Zelle eingesetzt. Durch die damit vereinfachte Herstellung und einhergehende Kostenreduzierung werden Festkörperzellen beziehungsweise Festkörperbatterien in der Folge konkurrenzfähiger gegenüber gewöhnlichen Lithium-Ionen-Batteriezellen und Dünnschichtzellen. Vorzugsweise ist die erfindungsgemäße Verwendung somit insbesondere für Batteriekomponenten einer Festkörperzelle vorgesehen, sowie dafür geeignet und ausgestaltet.

Ein zusätzlicher oder weiterer Aspekt der Erfindung sieht vor, dass die Batteriekomponente vor einer Zellenfertigung der Batteriezelle beschichtet wird.

Beispielsweise werden der Festkörperelektrolyt und/oder das Leitadditiv und/oder ein Kathodenmaterial einer Kompositkathode vor der Herstellung der Kompositkathode mit dem luftstabilen Festkörperelektrolytmaterial beschichtet. Dadurch sind die Komponenten von Anfang an luft- und feuchtigkeitsgeschützt. Dadurch ist es nicht notwendig, dass die Herstellung der Kathode unter Schutzatmosphäre, oder im Trockenraum mit ganz tiefem Taupunkt erfolgt. Dadurch ist eine besonders kostengünstige Zellenfertigung gewährleistet. Mit anderen Worten werden die für die Zellenfertigung benötigen Komponenten beschichtet und geschützt, bevor die Assemblierung und Produktionsvorgänge durchgeführt werden. Die Beschichtung kann hierbei in einer Schutzatmosphäre durchgeführt werden, zum Beispiel in einer Glovebox. Als Beschichtungsmethoden können Atomlagenabscheidung (atomic layer deposition, ALD), Sol-Gel, Sprühtrocknung, usw. eingesetzt werden. Nach dem Beschichtungsprozess ist es möglich, die nachfolgende Zellassemblierung in Luft mit kleinem Taupunkt (z.B. -10 °C), oder sogar in einer normalen Atmosphäre durchzuführen.

Ebenso denkbar ist beispielsweise, dass eine Kompositkathode mit einer gewissen Porosität (zum Beispiel 40%) hergestellt wird, und anschließend die Kompositkathode als Batteriekomponente beschichtet wird. Hierzu wird die poröse Kompositkathode beispielsweise mit einer Lösung aus dem luftstabilen Festkörperelektrolyt beschichtet, und somit vor Luft geschützt.

Die erfindungsgemäße Batteriekomponente weist eine äußere Beschichtung mit einem luftstabilen Festkörperelektrolyten auf. Die Beschichtung weist hierbei eine hinreichende Schichtdicke auf, um die Batteriekomponente zuverlässig vor Luft und Feuchtigkeit zu schützen. In einer geeigneten Dimensionierung weist die Beschichtung beispielsweise eine Schichtdicke zwischen 10 nm (Nanometer) und 1000 nm auf.

Die erfindungsgemäße Batteriezelle weist mindestens eine vorstehend beschriebene Batteriekomponente auf. Dabei gelten die Ausführungen im Zusammenhang mit der Batteriekomponente und/oder der Verwendung sinngemäß auch für die Batteriezelle und umgekehrt. Bei der Batteriezelle handelt es sich vorzugsweise um eine Festkörperzelle.

Nachfolgend sind Ausführungsbeispiele der Erfindung anhand einer Zeichnung näher erläutert. Darin zeigen in schematischen und vereinfachten Darstellungen:
Fig. 1 eine Festkörperbatterie,
Fig. 2 eine Beschichtung von einem Kathodenmaterial,
Fig. 3 eine Beschichtung von einem Leitadditiv,
Fig. 4 eine Beschichtung eines Festkörperelektrolyten, und
Fig. 5 ein Verfahren zur Beschichtung einer Kompositkathode.

Einander entsprechende Teile und Größen sind in allen Figuren stets mit den gleichen Bezugszeichen versehen.

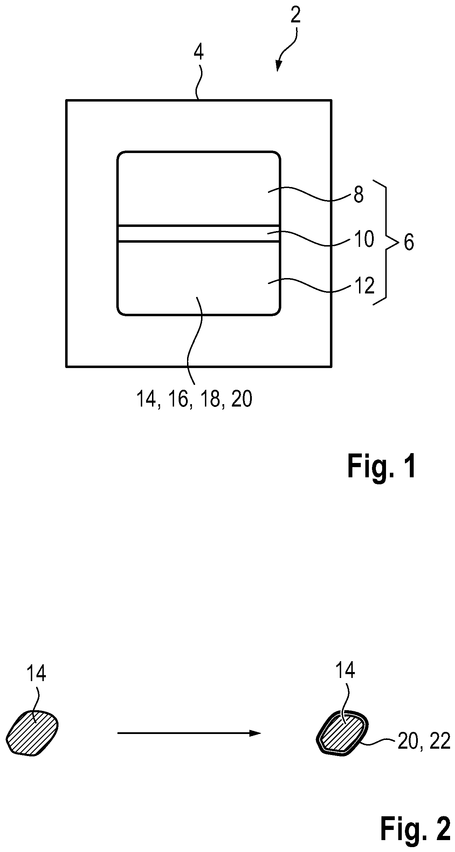

Die Fig. 1 zeigt eine Festkörperbatterie 2 für ein elektrisch angetriebenes oder antreibbares Kraftfahrzeug, beispielsweise einem Elektro- oder Hybridfahrzeug. Die Festkörperbatterie 2 weist ein Batteriegehäuse 4 sowie mindestens eine darin aufgenommene Batteriezelle 6 auf. Die nachfolgend auch als Festkörperzelle bezeichnete Batteriezelle 6 weist eine Anzahl von Batteriekomponenten 8, 10, 12, 14, 16, 18 auf. Die Batteriekomponente 8 ist eine die Anode der Batteriezelle 6 bildende Anodenschicht, wobei die Batteriekomponente 10 eine Separatorschicht ist. Die Batteriekomponente 12 ist eine Kompositkathode der Festkörperzelle 6, welche aus einem Verbundmaterial hergestellt ist, welche die Batteriekomponenten 14, 16 und 18 enthält.

Die Batteriekomponente 14 ist hierbei ein Kathodenmaterial, wobei die Batteriekomponente 16 ein Leitadditiv ist, und wobei die Batteriekomponente 18 ein Festkörperelektrolyt als ionisches Leitadditiv ist. Die Batteriekomponente 12 beziehungsweise eine oder jede Batteriekomponente 14, 16, 18 weisen eine geringe oder reduzierte Stabilität gegenüber Luft oder Feuchtigkeit auf. Mit anderen Worten weisen die Batteriekomponenten 12, 14, 16, 18 eine vergleichsweise hohe Empfindlichkeit gegenüber Luft oder Feuchtigkeit auf.

Zum Schutz dieser Batteriekomponenten 12, 14, 16, 18 ist eine oder mehrere dieser Komponenten mit einem luftstabilen Festkörperelektrolyten 20 beschichtet (Fig. 2 bis Fig. 4).

Fig. 2 zeigt hierbei eine Beschichtung des Kathodenmaterials 14. Das Kathodenmaterial 14 ist beispielsweise NMC, insbesondere NMC 811, und weist insbesondere einen hohen Ni-Gehalt auf. Die Beschichtung des aktiven Kathodenmaterials 14 mit dem luftstabilen Festkörperelektrolyten 20 schützt das Kathodenmaterial 14 vor einer chemischen Reaktion mit der Luft, und ermöglicht die Handhabung des Kathodenmaterials 14 bei normaler Atmosphäre.

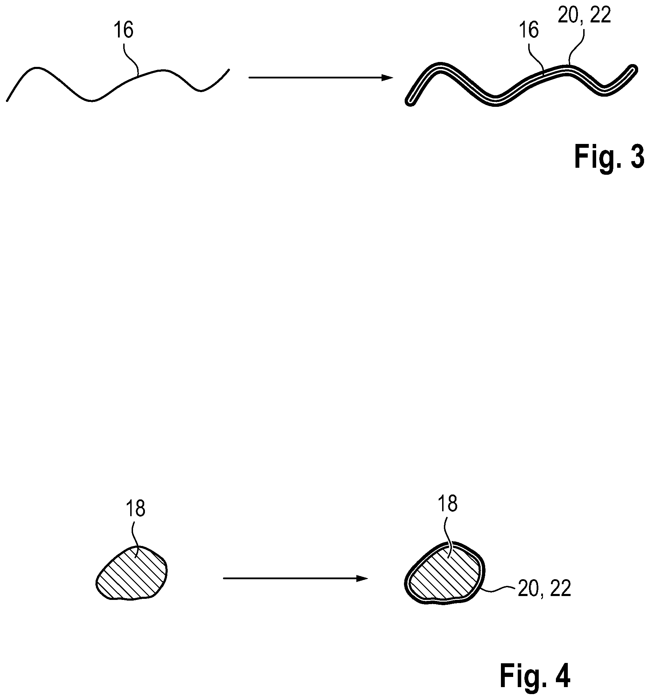

Fig. 4 zeigt eine Beschichtung des Festkörperelektrolyten 18. Der Festkörperelektrolyt 18 ist insbesondere als ein sulfidischer Festkörperelektrolyt ausgeführt. Die Beschichtung der Oberfläche des Festkörperelektrolyten 18 mit einem luftstabilen Festkörperelektrolyten 20 verbessert die Luftstabilität des sulfidischen Festkörperelektrolyten 18 und verhindert eine Freisetzung von Schwefelwasserstoff in die Luft.

Die Fig. 3 zeigt eine Beschichtung des Leitadditivs 16. Als Leitadditiv 16 sind hierbei beispielsweise kohlenstoffbasierte Leitpartikel, beispielsweise Carbonfasern, vorgesehen. Die Beschichtung von Kohlenstoff mit dem luftstabilem Festkörperelektrolyten 20 verringert ungewünschte Nebenreaktionen an den Grenzflächen zwischen dem kohlenstoffbasierten Leitadditiv 16 und dem sulfidischen Festkörperelektrolyten 18.

Die Beschichtung(en) kann (können) hierbei in einer Schutzatmosphäre durchgeführt werden, zum Beispiel in einer Glovebox. Als Beschichtungsmethoden können beispielsweise Atomlagenabscheidung, Sol-Gel, Sprühtrocknung, usw. eingesetzt werden. Nach dem Beschichtungsprozess ist es möglich, die nachfolgende Zellassemblierung in Luft mit kleinem Taupunkt (z.B. - 10 °C), oder sogar in einer normalen Atmosphäre durchzuführen. Die resultierende Schutzschicht oder Beschichtung ist in den Figuren mit dem Bezugszeichen 22 versehen.

Der luftstabile Festkörperelektrolyt 20 der Beschichtung 22 weist eine ionische Leitfähigkeit größer 10⁻⁴ S/cm, insbesondere größer 10⁻³ S/cm, auf. Die Beschichtung 22 weist hierbei beispielsweise eine Schichtdicke zwischen 10 nm und 1000 nm auf. Der luftstabile Festkörperelektrolyt 20 ist beispielsweise ein chloridbasierter Festkörperelektrolyt. Insbesondere ist der Festkörperelektrolyt 20 ein Material ausgewählt aus einer Gruppe, welche gebildet wird von Lithium-Indiumchlorid (Li₃InCl₆), Lithium-Indiumbromid (Li₃InBr₆), ein Lithium-Lanthaniodid (Li₃LaI₆), ein Lithium-Lutetiumchlorid (Li₃LuCl₆), oder ein lithiumleitendes Seltenerden-Halogenid der Form Li₃MX₆, wobei M entweder Yttrium Y, Erbium Er oder Scandium Sc, und wobei X entweder Chlor Cl, Brom Br, oder lod I repräsentiert, oder der Form Li₃₋ₓM₁₋ₓZrₓCl₆ (wobei x ≤ 0.6 und wobei M entweder Er oder Y repräsentiert), oder der Form Li₃Y₁₋ₓInₓCl₆, (wobei 0 ≤ x < 1), oder der Form LiₓScCl₃₊ₓ (wobei 0 ≤ x ≤ 5, insbesondere 1 ≤ x ≤ 5).

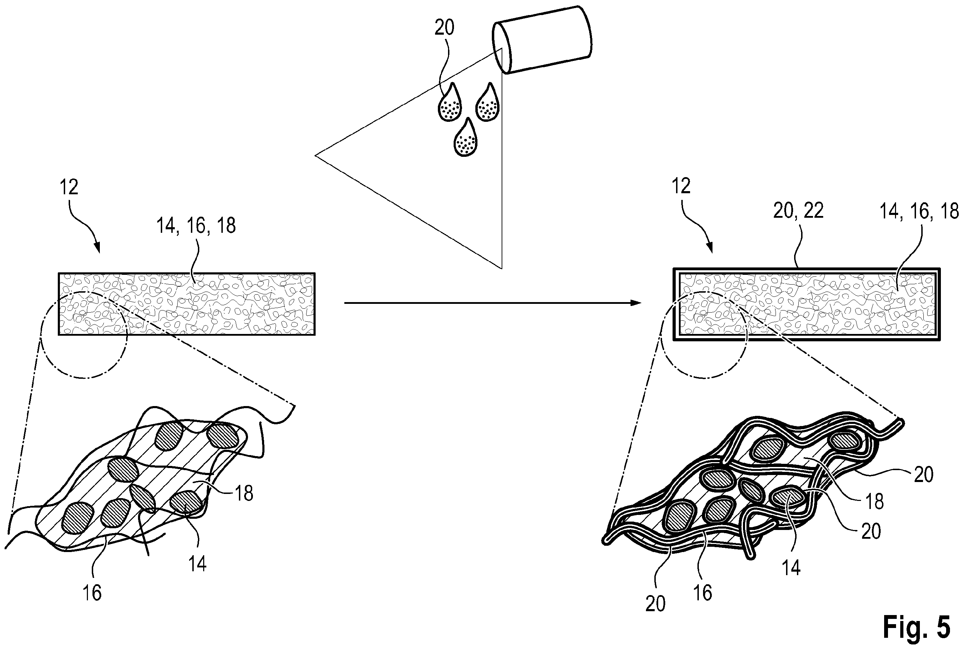

In dem Ausführungsbeispiel der Figuren 2 bis 4 werden die Batteriekomponenten 14, 16, 18 vorzugsweise beschichtet, bevor die Kompositkathode 12 hergestellt wird. Die Fig. 5 zeigt eine alternative Ausführung, bei welcher zunächst die Kompositkathode 12 hergestellt wird, welche anschließend mit dem Festkörperelektrolyten 20 beschichtet wird. Die Kompositkathode weist hierbei beispielsweise eine Porosität von 40% auf, so dass eine Lösung mit dem Festkörperelektrolyten 20 das Verbundmaterial im Wesentlichen vollständig durchsetzen oder infiltrieren, und somit beschichten kann.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Festkörperbatterie
- 4: Batteriegehäuse
- 6: Festkörperzelle/Batteriezelle
- 8: Batteriekomponente/Anodenschicht
- 10: Batteriekomponente/Separatorschicht
- 12: Batteriekomponente/Kompositkathode
- 14: Batteriekomponente/Kathodenmaterial
- 16: Batteriekomponente/Leitadditiv
- 18: Batteriekomponente/Festkörperelektrolyt
- 20: Festkörperelektrolyt
- 22: Beschichtung

## Patentansprüche

1. Verwendung eines luftstabilen Festkörperelektrolyten (20) als Beschichtung für eine Batteriekomponente (12, 14, 16, 18) einer Batteriezelle (6).

2. Verwendung nach Anspruch 1,
**dadurch gekennzeichnet,**
**dass** die Batteriezelle (6) eine Festkörperzelle ist.

3. Verwendung nach Anspruch 1 oder 2,
**dadurch gekennzeichnet,**
**dass** der Festkörperelektrolyt (20) eine ionische Leitfähigkeit größer 10⁻⁴ S/cm, insbesondere größer 10⁻³ S/cm, aufweist.

4. Verwendung nach einem der Ansprüche 1 bis 3,
**dadurch gekennzeichnet,**
**dass** der Festkörperelektrolyt (20) ausgewählt ist aus der Gruppe die gebildet wird von
- Li₃InCl₆,
- Li₃InBr₆,
- Li₃YX₆, wobei X Cl, Br, oder I repräsentiert,
- Li₃ErX₆, wobei X Cl, Br, oder I repräsentiert,
- Li₃ScX₆, wobei X Cl, Br, oder I repräsentiert,
- Li₃LaI₆,
- Li₃LuCl₆,
- Li₃₋ₓEr₁₋ₓZrₓCl₆, wobei x ≤ 0.6,
- Li₃₋ₓY₁₋ₓZrₓCl₆, wobei x ≤ 0.6,
- Li₃Y₁₋ₓInₓCl₆, wobei 0 ≤ x < 1, und
- LiₓScCl₃₊ₓ, wobei 0 ≤ x ≤ 5.

5. Verwendung nach einem der Ansprüche 1 bis 4,
**dadurch gekennzeichnet,**
**dass** die Batteriekomponente (12, 14, 16, 18) vor einer Zellenfertigung der Batteriezelle (6) beschichtet wird.

6. Batteriekomponente (12) einer Batteriezelle (6), aufweisend mindestens eine Beschichtung (22) aus einem luftstabilen Festkörperelektrolyten (20).

7. Batteriekomponente (12) nach Anspruch 6,
**dadurch gekennzeichnet,**
**dass** die Beschichtung (22) eine Schichtdicke zwischen 10 nm und 1000 nm aufweist.

8. Batteriezelle (6) aufweisend eine Batteriekomponente (12, 14, 16, 18) nach Anspruch 6 oder 7.
